# EUROPÄISCHE PATENTSCHRIFT

(11) **EP 1 301 286 B1**
(45) Veröffentlichungstag und Bekanntmachung des Hinweises auf die Patenterteilung: **07.04.2004**
(21) Anmeldenummer: 01955199.3
(22) Anmeldetag: 05.06.2001
(51) Int. Cl.: B05D 7/24

(54) **VERFAHREN ZUR HERSTELLUNG EINER PERMANENTEN ENTFORMUNGSSCHICHT DURCH PLASMAPOLYMERISATION AUF DER OBERFLÄCHE EINES FORMTEILWERKZEUGS, FORMTEILWERKZEUG UND VERWENDUNG**
METHOD FOR PRODUCING A PERMANENT DEMOULDING LAYER BY PLASMA POLYMERIZATION ON THE SURFACE OF A MOULDED-PART TOOL, A MOULDED-PART TOOL PRODUCED BY SAID METHOD AND THE USE THEREOF
PROCEDE POUR FABRIQUER PAR POLYMERISATION PLASMA UNE COUCHE DE DEMOULAGE PERMANENTE SUR LA SURFACE D'UN OUTIL POUR PIECES MOULEES, OUTIL POUR PIECES MOULEES FABRIQUE SELON CE PROCEDE ET SON UTILISATION

(30) Priorität: 17.07.2000 DE 10034737
(43) Veröffentlichungstag der Anmeldung: 16.04.2003
(73) Patentinhaber: Acmos Chemie Gmbh & Co., 28199 Bremen (DE); Fraunhofer-Gesellschaft zur Förderung der angewandten Forschung e.V., 80686 München (DE)
(72) Erfinder: WOCHNOWSKI, Horst, 22844 Norderstedt (DE); KLYSZCZ-NASKO, Holger, 28816 Stuhr (DE); BAALMANN, Alfred, 27711 Osterholz-Scharmbeck (DE); VISSING, Klaus-D., 27321 Morsum (DE)
(74) Vertreter: Winkler, Andreas, Dr.
(86) Internationale Anmeldenummer: PCT/DE2001/002112
(87) Internationale Veröffentlichungsnummer: WO 2002/005972

(56) Entgegenhaltungen:
- EP-A- 0 374 080
- EP-A- 0 570 944
- EP-A- 0 841 140
- US-A- 5 316 716
- PATENT ABSTRACTS OF JAPAN vol. 010, no. 176 (M-491), 20. Juni 1986 (1986-06-20) & JP 61 027212 A (SUMITOMO BAKELITE CO LTD), 6. Februar 1986 (1986-02-06)

## Beschreibung

Die vorliegende Erfindung betrifft ein Verfahren zur Herstellung einer permanenten Entformungsschicht durch Plasmapolymerisation auf der Oberfläche eines Formteilwerkzeugs, ein nach dem Verfahren herstellbares Formteilwerkzeug und dessen Verwendung.

In der Technik ist es von entscheidender Bedeutung, daß Formteile, die in einem Formteilwerkzeug ausgeformt werden, leicht aus diesem entnehmbar sind, wobei selbstverständlich eine unbeschädigte Entnahme des Formteils möglich sein soll.

Zur Erleichterung der Entformung werden daher üblicherweise Trennmittel verwendet.

Aus dem Stand der Technik sind Trennmittelsysteme, beispielsweise in Form von Lösungen oder Dispersionen bekannt, die normalerweise auf die Oberfläche des Formteilwerkzeugs aufgesprüht werden. Diese Trennmittelsysteme bestehen aus trennaktiven Wirkstoffen und einem Trägermedium, in der Regel organische Lösungsmittel, wie beispielsweise Kohlenwasserstoffe (teilweise auch chloriert), und Wasser. Solche aufgesprühten Trennmittelsysteme trennen im wesentlichen immer das Formteil von dem Formteilwerkzeug durch eine Mischung aus einem Kohäsionsbruch und einem Adhäsionsbruch, wobei jedoch meistens Trennmittel auf dem zu trennenden Formteil verbleibt. Dies kann vielfach zu Schwierigkeiten bei der Weiterverarbeitung, z.B. beim Kleben, Kaschieren, Lackieren oder Metallisieren des Formteils, führen. Es muß daher ein Reinigungsschritt zwischengeschaltet werden, was zusätzliche Kosten hervorruft. Zudem muß vor jeder Ausformung (oder zumindest regelmäßig) Trennmittel auf die Oberflächen der Formgebungswerkzeuge aufgetragen werden, was ebenfalls kostspielig ist und zu ungleichmäßigen Entformungsergebnissen führen kann. Schließlich emittieren diese Trennmittelsysteme erhebliche Mengen von Lösungsmitteln in die Umwelt.

Aus dem Stand der Technik sind auch sogenannte semipermanente Trennmittel bekannt, die im Vergleich zu den herkömmlichen, bereits oben beschriebenen Trennmittelsystemen eine verlängerte Standzeit bereitstellen und demnach etwas kostengünstiger sind. Jedoch muß auch bei diesen semipermanenten Trennmitteln von Zeit zu Zeit Trennmittel nachgegeben werden, und es ist ebenfalls nicht auszuschließen, daß Trennmittel auf dem zu trennenden Formteil verbleibt. Am Markt erhältliche Produkte trennen darüberhinaus Polyurethan-Formteile nicht oder nur schlecht.

Bekannt sind ebenfalls Trennmittelkompositionen, die den zu formenden Formmassen intern zugegeben werden können, innerhalb der Formmassen an deren Grenzflächen wandern und an diesen Grenzflächen den Trennprozeß auslösen. Durch diese internen Trennmittelsysteme entfällt das ständige Auftragen des Trennmittels auf die Formteilwerkzeuge, wodurch zum einen Kosten gespart werden können, und zum anderen die Produktivität gesteigert werden kann. Bei Verwendung interner Trennmittelsysteme ergeben sich üblicherweise aber Schwierigkeiten beim Kleben, Kaschieren, Lackieren oder Metallisieren der entformten Formteile durch das Vorhandensein bzw. Austreten des internen Trennmittels.

In der EP 084 11 40 A2 wird ein Verfahren zur Verbesserung des Lösens des Formteils aus dem Formteilwerkzeug beschrieben, bei dem durch eine Plasmabeschichtung die Oberflächenenergie herabgesetzt ist. Solche plasmapolymeren Schichten mit niedriger Oberflächenenergie sind bereits bekannt, wie beispielsweise in der DE 195 431 33.2 beschrieben. Solche Schichten lassen sich derart einstellen, daß ausgehärtete Kunststoffgegenstände keine chemische Reaktion mit der Oberfläche der plasmapolymeren Schichten eingehen. Dennoch sind recht hohe Adhäsionskräfte zu verzeichnen, was dazu führen kann, daß bestimmte Formteile erst entformt werden können, wenn die entsprechenden Formmassen vollständig ausgehärtet sind, da ansonsten eine Schädigung der Oberfläche der entformten Gegenstände auftreten kann. Die Trennwirkung und die Produktivität bei der Verwendung solcher plasmapolymeren Schichten ist demnach nicht zufriedenstellend.

Die EP-A-0 570 944 beschreibt die Ausbildung einen gradienten-Schicht durch Plasmapolymerisation auf Silberschmuck oder Besteck.

Aufgabe der vorliegenden Erfindung ist es, die Nachteile des Standes der Technik zu überwinden und das gattungsgemäße Verfahren dahingehend weiterzubilden, daß auf den Formteilwerkzeugen durch Plasmapolymerisation eine niederenergetische und trennaktive Oberfläche geschaffen wird, die derart stabil ist, daß ihre Eigenschaften permanent erhalten bleiben.

Ferner besteht eine Aufgabe der vorliegenden Erfindung darin, eine entsprechende permanente Entformungsschicht bereitzustellen und deren Verwendung zu ermöglichen.

Erfindungsgemäß wird diese Aufgabe dadurch gelöst, daß durch zeitliche Variation der Polymerisationsbedingungen ein Gradientenschichtenaufbau in der Entformungsschicht erzeugt wird während der Plasmapolymerization.

Dabei wird vorgeschlagen, daß als Precursor der Polymerisationsreaktion vorzugsweise Silikonverbindungen, fluorierte Silikonverbindungen, Kohlenwasserstoffe oder zumindest teilweise fluorierte Kohlenwasserstoffe, bevorzugt wenigstens ein Siloxan, besonders bevorzugt Hexamethyldisiloxan (HMDSO) und/oder Octamethyltrisiloxan verwendet wird.

In einer Ausführungsform der Erfindung wird auch vorgeschlagen, daß bei der Plasmapolymerisation Sauerstoffgas oder sauerstoffhaltiges Gas, wie z.B. Luft, CO₂, N₂O, etc., eingesetzt wird, wobei vorzugsweise die Konzentration des Sauerstoffgases während der Plasmapolymerisation verringert wird.

Auch ist vorgesehen, daß die Bedingungen so gewählt werden, daß weniger Energie in das Plasma eingekoppelt wird, als zur vollständigen Fragmentierung der Precursor der Polymerisationsreaktion notwendig ist.

Erfindungsgemäß wird außerdem vorgesehen, daß die Bedingungen so gewählt werden, daß eine im wesentlichen geschlossene Beschichtung der Oberfläche des Formteilwerkzeugs erreicht wird.

Vorzugsweise wird eine Schichtdicke der Entformungsschicht von zwischen 1 nm und 10 µm, bevorzugter von zwischen 10 nm und 5 µm und höchst bevorzugt von zwischen 100 nm und 1 µm gebildet.

Ferner kann vorgesehen sein, daß die Plasmapolymerisation in einer Zeitdauer von 1 Sekunde bis 1 Stunde, bevorzugt von 30 Sekunden bis 30 Minuten und höchst bevorzugt von 3 Minuten bis 20 Minuten durchgeführt wird.

Erfindungsgemäß wird vorgeschlagen, daß die Oberfläche des Formteilwerkzeugs zur Reinigung und/oder Aktivierung derselben vor der Plasmapolymerisation mit einem Gasplasma behandelt wird.

Die Erfindung betrifft außerdem ein Formteilwerkzeug mit einer erfindungsgemäß herstellbaren permanenten Entformungsschicht, wobei vorzugsweise an der Oberfläche der Entformungsschicht keine stark wechselwirkenden oder reaktiven Gruppen angeordnet sind.

Besonders bevorzugt ist vorgesehen, daß an der Oberfläche der Entformungsschicht ein hoher Anteil an CH₃ - und CF₃ -Gruppen vorliegt.

Schließlich betrifft die Erfindung noch die Verwendung eines erfindungsgemäßen Formteilwerkzeugs zur Ausformung von Kunststoffgegenständen, vorzugsweise Gegenständen aus Polyurethan, besonders bevorzugt aus Polyurethanschaum.

Das Ziel der Herstellung einer trennaktiven Beschichtung mit außerordentlich fester Anbindung derselben an die Formteilwerkzeugoberfläche ist erfindungsgemäß dadurch zu erreichen, daß durch die zeitliche Variation der Bedingungen der Plasmapolymerisation die Trennwirkung im Schichtenaufbau nach außen, d.h. zum Formteil hin, zunimmt (Gradientenschichtenaufbau).

Der Gradientenschichtenaufbau der Trennschicht soll also so ausgestaltet sein, daß ein Übergang von einer Haftvermittlung, in Form einer besonders stabilen Grundschicht, auf der Oberfläche des Formteilwerkzeuges zur eigentlichen Trennschicht in Richtung des Formteils ermöglicht wird, wobei in dieser Richtung die Trennwirkung zunimmt.

Der Erfindung liegt die überraschende Erkenntnis zugrunde, daß mit Hilfe des erfindungsgemäßen Verfahrens eine Entformungsschicht bereitgestellt werden kann, die eine sowohl niederenergetische als auch eine trennaktive Oberfläche liefert. Durch einen solchen Aufbau können beispielsweise kleinere Fehlstellen, die z.B. durch mechanische Einflüsse hervorgerufen werden, in einem großen Maße ausgeglichen werden, ohne daß die Entformungsschicht nicht mehr verwendbar ist. Die Zugabe externer und/oder interner Trennmittel ist dabei nicht erforderlich; deren Verwendung ist allerdings weiterhin möglich, wenn damit bestimmte zusätzliche Effekte erreicht werden sollen, z.B. zur gezielten Beeinflussung der Oberfläche der Formteile.

Die nach dem erfindungsgemäßen Verfahren hergestellte Entformungsschicht ermöglicht zudem eine unbeschädigte Entnahme des Formteils aus den Formteilwerkzeugen, liefert die gewünschte Oberflächengüte der Formteile, beispielsweise keine Fließfehler, gute Oberflächenstrukturen, eine gute Haptik usw.. Überdies ermöglicht es ein gutes Finish, d.h. ohne Zwischenschaltung eines Reinigungsschrittes können die entformten Formteile, beispielsweise durch Kleben, Kaschieren, Lackieren oder Metallisieren, weiterverarbeitet werden. Ein Übertrag vom Formteil auf die Trennschicht wird vermieden. Die nach dem erfindungsgemäßen Verfahren hergestellte Entformungschicht ist umweltfreundlich sowie kostengünstig, da sie eine permanente Trennschicht darstellt.

Die erfindungsgemäß hergestellte Entformungsschicht hat sich gegenüber üblichen aromatischen und nicht-aromatischen Lösungsmitteln, wie Benzin oder Isopropanol, als beständig erwiesen. Die Trennschicht ist daher ohne weiteres und leicht mit Reinigungsbenzin und einem weichen Tuch säuberbar. Darüberhinaus ist eine hohe Temperaturbeständigkeit zu beobachten gewesen, wenigstens bis 200°C, teilweise noch darüber. Durch den Gradientenschichtenaufbau der Trennschicht ist diese trotz mechanischer Verletzungen über einen langen Zeitraum einsetzbar, ohne daß die Trennwirkung beeinträchtigt wird. Bei stärkeren Beschädigungen ist aber auch ein Nachbeschichten ohne weiteres möglich.

Plasmapolymerisation ist ein Prozeß, bei dem aus einem aus Precursor-Molekülen bestehenden Dampf in einer hochfrequenten elektrischen Entladung unter Einwirkung von Ionen, Elektronen und Photonen Molekülfragmente gebildet werden, die unter definierten Randbedingungen zur Bildung einer amorphen, i.d.R. vernetzten Polymerschicht auf einem Substrat führen. Plasmapolymerisation unterscheidet sich von einer Polymerisation im konventionellen Sinne, bei der unter chemischer Vernetzung Polymere gebildet werden, dadurch daß das Ausgangsmaterial zunächst fragmentiert und anschließend polymerisiert wird.

Bei dem erfindungsgemäßen Verfahren ist die in das Plasma eingekoppelte Energiemenge von Bedeutung, da es zum Aufbau eines Gradientenschichtenaufbaus wesentlich ist, daß keine vollständige Fragmentierung der Precursor-Moleküle erfolgt, was im folgenden noch detaillierter anhand eines Beispieles erläutert werden soll.

Die Eigenschaften der polymerisierten Schichten, z.B. Struktur, Härte, Dichte, Trennwirkung, etc., sind abhängig von den Betriebsparametern der Plasmaanlage, wie Druck, Durchflußrate, Leistung in der Entladung und Art der Precursor-Moleküle. Durch geeignete Wahl und zeitliche Variation der obigen Parameter läßt sich erreichen, daß z.B. für den Fall der Polymerisation siliciumorganischer Verbindungen das anorganische Netzwerk (glasähnlich) direkt auf der Formoberfläche und das organische Netzwerk auf dem anorganischen Netzwerk kontinuierlich aufgebracht wird. Dadurch wird eine optimale Haftung zum Untergrund und eine optimale Permanenttrennwirkung zum Formteil hin (z.B. durch einen hohen Anteil CH₃und/oder CF₃-Gruppen in der Oberfläche) erreicht.

Am Beispiel von Hexamethyldisiloxan (HMDSO) wird die Precursor-Struktur (links) einer möglichen (idealisierten und vereinfachten) plasmapolymerisierten Struktur (rechts) gegenübergestellt.

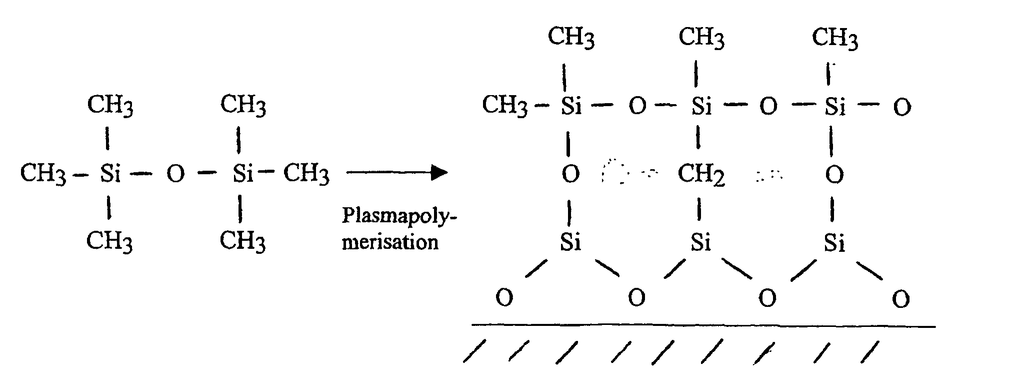

Die Siloxandipole weisen zur Phasengrenzfläche, während die freie Oberfläche in dichter Packung durch Methylgruppen abgedeckt wird, die eine quasifluide, äußerst trennaktive Schicht ergeben.

Durch den richtig gewählten Energieeintrag erfolgt zunächst eine weitgehende Spaltung der Si-C-Bindungen, aber ein weitgehender Erhalt der Si-O-Bindungen, was zur Ausbildung einer äußerst stabilen SiO₂-Grundschicht auf der Oberfläche des Formteilwerkzeuges führt. Hierfür und für die weitere Kopplung an darüberliegende Schichten ist auch eine ausreichende Konzentration an O₂-Gas wichtig. Hierauf wird dann wieder durch richtig gewählten Energieeintrag ein z.B. methylgruppenreicher Schichtaufbau zur freien Oberfläche durchgeführt.

Weitere Merkmale und Vorteile der Erfindung ergeben sich aus der nachfolgenden Beschreibung, in der Ausführungsbeispiele im einzelnen erläutert sind.

### Beispiele

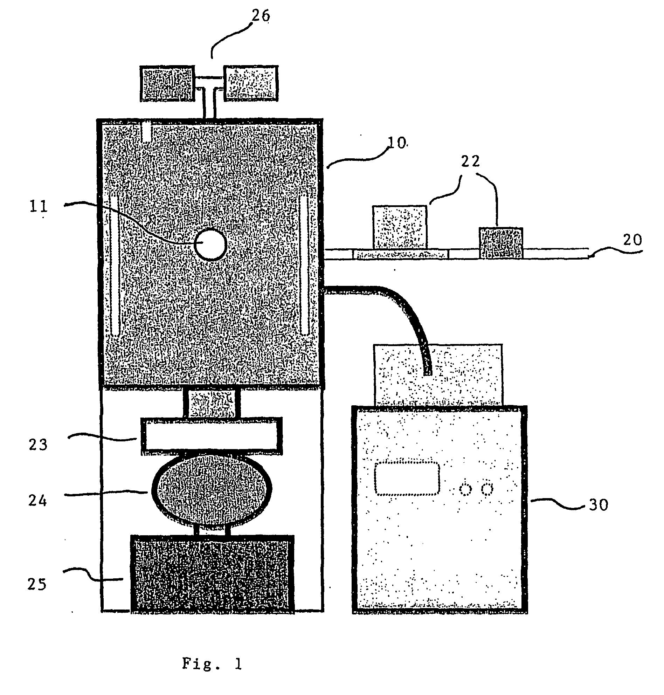

Die Beschichtung von Substraten mit Plasmapolymerisation wurde in einer Anlage durchgeführt, wie sie schematisch in der beigefügten Zeichnung dargestellt ist.

In der Zeichnung ist die eigentliche Reaktionskammer mit 10 bezeichnet. Zur visuellen Kontrolle der Reaktion ist ein Sichtfenster 11 vorgesehen. Die Precursorgase für die Plasmapolymerisationsreaktion werden über Leitung 20 zugeführt, die mit Gasregelventilen 22 (mit Absperrventil) versehen ist. Zur Erzeugung der Niederdruckbedingungen in der Reaktionskammer sind unterhalb eines Absperrventils 23 eine Rootspumpe 24 und eine Drehschieberpumpe 25 angeordnet. Die Druckmessung erfolgt über Druckmeßeinheit 26. Für den Energieeintrag in das Plasma ist ein HF-Generator 30 mit Anpaßnetzwerk vorgesehen.

Bei den durchgeführten Versuchen wurde eine Reaktionskammer mit den Abmessungen 65 cm/78 cm/70 cm (Höhe/Breite/Tiefe) mit einem Gesamtvolumen von 355 Litern und einem Nutzvolumen von 115 Litern eingesetzt. Die Anregungsfrequenz lag bei 13,56 MHz bei einer maximalen HF-Leistung von 2.500 W. Die Pumpleistung betrug 400 m³/h bei 0,3 mbar.

Als Substrate wurden Testformen aus einer AlMg₃-Legierung verwendet. Die Platten hatten eine Stärke von 10 mm und eine Kantenlänge von 100 mm mit abgefräster Oberfläche von definierter Rauhigkeit. Vor Aufbringen der Beschichtung durch Plasmapolymerisation wurden die Testformen einer konventionellen Reinigung unterzogen.

Die Testreihen ergaben, daß niederenergetische Oberflächen, d.h. solche, die auf glatten Substraten einen Wasserrandwinkel von > 100° aufweisen, in der beschriebenen Anlage mit einem Gasgemisch aus Hexamethyldisiloxan (HMDSO) und Sauerstoff bei einem Gasflußverhältnis von 1/0 bis 1/4 erzeugt werden können. Permanente Trennschichten ergeben sich bei der beschriebenen Anlage mit dem genannten Gasgemisch insbesondere bei einem Gasflußverhältnis von 4,1/1 bis 5,7/1 und einer Generatorleistung zwischen 500 und 650 W bei Aufbringen der letzten Schichten).

### Beispiel 1

Testformen wurden gemäß des in Tabelle 1 dargestellten Protokolls durch Plasmapolymerisation beschichtet.

**Tabelle 1**

| | | Gasfluß [cm³/min] | | |
|---|---|---|---|---|
| | Gasart | Schritt 1 | Schritt 2 | Schritt 3 |
| Gas 1 | O₂ | 100 | | 9 |
| Gas 2 | HMDSO | | 20 | 52 |
| Gas 3 | H₂ | 500 | 80 | |
| Leistung (W) | | 1000 | 1500 | 600 |
| Zeit (s) | | 150 | 60 | 1200 |
| Druck Ba (mbar) | | 0,096 | 0,047 | 0,034 |

### Beispiel 2

Testformen wurden gemäß des in Tabelle 2 dargestellten Protokolls durch Plasmapolymerisation beschichtet.

**Tabelle 2**

| | | Gasfluß [cm³/min] | | |
|---|---|---|---|---|
| | Gasart | Schritt 1 | Schritt 2 | Schritt 3 |
| Gas 1 | O₂ | 100 | | 12 |
| Gas 2 | HMDSO | | 20 | 50 |
| Gas 3 | H₂ | 500 | 80 | |
| Leistung (W) | | 1000 | 1500 | 600 |
| Zeit (s) | | 150 | 60 | 1200 |
| Druck Ba (mbar) | | 0,093 | 0,046 | 0,033 |

### Beispiel 3

Testformen wurden gemäß des in Tabelle 3 dargestellten Protokolls durch Plasmapolymerisation beschichtet.

**Tabelle 3**

| | Gasart | Schritt 1 | Schritt 2 | Schritt 3 | Schritt 4 | Schritt 5 | Schritt 6 | Schritt 7 | Schritt 8 |
|---|---|---|---|---|---|---|---|---|---|
| Gas 1 | O₂ | 100 | 100 | 100 | 50 | 23 | 23 | 16 | 9 |
| Gas 2 | HMDSO | | | 5 | 10 | 46 | 46 | 49 | 52 |
| Gas 3 | H₂ | 500 | 100 | | | | | | |
| Leistung (W) | | 1000 | 2000 | 2300 | 1100 | 1100 | 500 | 500 | 600 |
| Zeit (s) | | 300 | 60 | 60 | 60 | 300 | 300 | 300 | 300 |
| Druck Ba (mbar) | | 0,093 | 0,061 | 0,059 | 0,047 | 0,044 | 0,040 | 0,035 | 0,033 |

### Beispiel 4

Testformen wurden gemäß des in Tabelle 4 dargestellten Protokolls durch Plasmapolymerisation beschichtet.

**Tabelle 4**

| | Gasart | Schritt 1 | Schritt 2 | Schritt 3 | Schritt 4 | Schritt 5 | Schritt 6 |
|---|---|---|---|---|---|---|---|
| Gas 1 | M5515* | 0 | 0 | 0 | 0 | 0 | 15 |
| Gas 2 | O₂ | 100 | 100 | 100 | 50 | 23 | 15 |
| Gas 3 | HMDSO | 0 | 0 | 5 | 10 | 46 | 0 |
| Gas 4 | H₂ | 500 | 100 | 0 | 0 | 0 | 0 |
| Leistung (W) | | 1000 | 2000 | 2300 | 1100 | 1100 | 1000 |
| Zeit (s) | | 300 | 60 | 60 | 60 | 300 | 60 |
| Druck Ba (mbar) | | 0,085 | 0,056 | 0,049 | 0,036 | 0,041 | 0,052 |

| | | | | | | | |
|---|---|---|---|---|---|---|---|
| *M5515 - Octamethyltrisiloxan | | | | | | | |

Die beschichteten Testformen wurden auf ihre Entformungseigenschaften untersucht. Dazu wurden die beschichteten Platten an den Seiten und auf der Unterseite mit externem Trennmittel behandelt. Eine Benetzung der beschichteten Oberseite wird dabei vermieden. Eine Weichschaum-Plattenform (200x200x20mm) wird ebenfalls mit dem Trennmittel eingesprüht und bei 60°C Vorlauftemperatur beheizt. Die Prüfplatte wird auf den Formboden gelegt und der Freiraum an den Seiten mit Zuschnitten aus Polyurethan-Weichschaum ausgefüllt. Die Platte wird auf ca. 50°C, gemessen auf der beschichteten Oberfläche, temperiert.

Anschließend wird auf die Prüfplatte eine Polyurethanschaumsystem (Lagopur COC, 198, Fa. LAGOMA) aufgebracht. Hierzu werden 50 g Polyol und eine entsprechende Menge Isocyanat eingesetzt. Nach 5 Minuten Reaktionszeit wird das Teil entnommen und die Trennwirkung von der beschichteten Oberfläche beurteilt. Bei guter Trennwirkung wird die Prozedur so lange wiederholt, bis entweder die Trennwirkung nachläßt oder von einer permanenten Trennwirkung ausgegangen werden kann (mindestens 10 Teile).

Die Trennwirkung wurde gemäß dem folgenden Schema beurteilt:

**Tabelle 5**

| | |
|---|---|
| 1 | Teil klebt in der Form fest |
| 2 | Teil geht nur mit Kraftanwendung aus der Form |
| 10 | Teil muß mit stärkerem Ziehen entnommen werden |
| 20 | Teil kann mit leichtem Ziehen entnommen werden |
| 30 | Teil kann ohne jede Kraftanwendung sehr leicht entnommen werden |

Die Ergebnisse für die Trennwirkung der in den Beispielen 1 bis 4 beschriebenen Permanentbeschichtungen ist in der nachfolgenden Tabelle 6 angegeben.

**Tabelle 6**

| Trennwirkung | 1. Entformung | 2.-5. Entformung | 6.-10. Entformung |
|---|---|---|---|
| Beispiel 1 | 30 | 20 | 20 |
| Beispiel 2 | 30 | 30 | 20 |
| Beispiel 3 | 30 | 20 | 20 |
| Beispiel 4 | 30 | 20 | 20 |

In allen Fällen wurden die gewünschten Oberflächeneigenschaften erreicht. Auf der Beschichtung waren keinerlei Rückstände von den Formlingen festzustellen.

Die Permanenz der mit Plasmapolymerisation hergestellten Trennschichten erfolgte mit Hilfe eines oberflächenanalytischen Verfahrens (ESCA (Electronenspektroskopie für die chemische Analyse)). Dabei hat sich gezeigt, daß kein signifikanter Übertrag des charakteristischen Elementes der Trennschicht (Si) auf das zu entformende Bauteil stattfindet. Durch die nachhaltige Nutzbarkeit der Trennwirkung und den Beweis, daß sich die Entformungsschicht durch Abtrag nicht selbst verbraucht, ist die Permanenz der Beschichtung gezeigt.

Die in der vorstehenden Beschreibung sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung einer permanenten Entformungsschicht durch Plasmapolymerisation auf der Oberfläche eines Formteilwerkzeugs, **dadurch gekennzeichnet, daß** durch zeitliche Variation der Polymerisationsbedingungen während der Plasmapolymerisation ein Gradientenschichtenaufbau in der Entformungsschicht erzeugt wird.

2. Verfahren nach Anspruch 1, **dadurch gekennzeichnet, daß** als Precursor der Polymerisationsreaktion Silikonverbindungen, fluorierte Silikonverbindungen, Kohlenwasserstoffe oder zumindest teilweise fluorierte Kohlenwasserstoffe verwendet werden.

3. Verfahren nach Anspruch 2, **dadurch gekennzeichnet, daß** als Precursor der Polymerisationsreaktion wenigstens ein Siloxan verwendet wird.

4. Verfahren nach Anspruch 3, **dadurch gekennzeichnet, daß** als Precursor der Polymerisationsreaktion Hexamethyldisiloxan (HMDSO) und/oder Octamethyltrisiloxan verwendet wird.

5. Verfahren nach einem der vorangehenden Ansprüche, **dadurch gekennzeichnet, daß** bei der Plasmapolymerisation Sauerstoffgas oder sauerstoffhaltiges Gas eingesetzt wird.

6. Verfahren nach Anspruch 5, **dadurch gekennzeichnet, daß** die Konzentration des Sauerstoffgases während der Plasmapolymerisation verringert wird.

7. Verfahren nach einem der vorangehenden Ansprüche, **dadurch gekennzeichnet, daß** die Bedingungen so gewählt werden, daß weniger Energie in das Plasma eingekoppelt wird, als zur vollständigen Fragmentierung der Precursor der Polymerisationsreaktion notwendig ist.

8. Verfahren nach einem der vorangehenden Ansprüche, **dadurch gekennzeichnet, daß** die Bedingungen so gewählt werden, daß eine im wesentlichen geschlossene Beschichtung der Oberfläche des Formteilwerkzeugs erreicht wird.

9. Verfahren nach einem der vorangehenden Ansprüche, **dadurch gekennzeichnet, daß** eine Schichtdicke der Entformungsschicht von zwischen 1 nm und 10 µm, bevorzugt von zwischen 10 nm und 5 µm und höchst bevorzugt von zwischen 100 nm und 1µm gebildet wird.

10. Verfahren nach einem der vorangehenden Ansprüche, **dadurch gekennzeichnet, daß** die Plasmapolymerisation in einer Zeitdauer von 1 Sekunde bis 1 Stunde, bevorzugt von 30 Sekunden bis 30 Minuten und höchst bevorzugt von 3 Minuten bis 20 Minuten durchgeführt wird.

11. Verfahren nach einem der vorangehenden Ansprüche, **dadurch gekennzeichnet, daß** die Oberfläche des Formteilwerkzeugs zur Reinigung und/oder Aktivierung derselben vor der Plasmapolymerisation mit einem Gasplasma behandelt wird.

12. Formteilwerkzeug mit einer permanenten Entformungsschicht, herstellbar nach einem Verfahren gemäß der Ansprüche 1 bis 11.

13. Formteilwerkzeug nach Anspruch 12, **dadurch gekennzeichnet, daß** an der Oberfläche der Entformungsschicht keine stark wechselwirkenden oder reaktiven Gruppen angeordnet sind.

14. Formteilwerkzeug nach Anspruch 13 **dadurch gekennzeichnet, daß** an der Oberfläche der Entformungsschicht ein hoher Anteil an CH₃ - und CF₃ -Gruppen vorliegt.

15. Verwendung eines Formteilwerkzeugs nach einem der Ansprüche 12 bis 14 zur Ausformung von Kunststoffgegenständen.

16. Verwendung nach Anspruch 15 zur Ausformung von Gegenständen aus Polyurethan.

17. Verwendung nach Anspruch 16 zur Ausformung von Gegenständen aus Polyurethanschaum.

## Claims

1. A process for the production of a permanent demoulding layer by plasma polymerisation on the surface of a moulding tool, **characterised in that** a gradient layer formation is produced in the demoulding layer by variation per unit of time of the polymerisation conditions during the plasma polymerisation.

2. A process according to claim 1, **characterised in that** silicone compounds, fluorinated silicone compounds, hydrocarbons or at least partially fluorinated hydrocarbons are used as precursor of the polymerisation reaction.

3. A process according to claim 2, **characterised in that** at least one siloxane is used as precursor of the polymerisation reaction.

4. A process according to claim 3, **characterised in that** hexamethyl disiloxane (HMDSO) and/or octamethyl trisiloxane is used as precursor of the polymerisation reaction.

5. A process according to any one of the preceding claims, **characterised in that** oxygen gas or oxygen-containing gas is used in the plasma polymerisation.

6. A process according to claim 5, **characterised in that** the concentration of the oxygen gas is reduced during the plasma polymerisation.

7. A process according to any one of the preceding claims, **characterised in that** the conditions are so selected that less energy is input into the plasma than is required for complete fragmentation of the precursors of the polymerisation reaction.

8. A process according to any one of the preceding claims, **characterised in that** the conditions are so selected that a substantially closed coating of the surface of the moulding tool is obtained.

9. A process according to any one of the preceding claims, **characterised in that** a demoulding layer thickness of between 1 nm and 10 µm, preferably between 10 nm and 5 µm, and most preferably between 100 nm and 1 µm is formed.

10. A process according to any one of the preceding claims, **characterised in that** the plasma polymerisation is carried out in a period of 1 second to 1 hour, preferably 30 seconds to 30 minutes, and most preferably 3 minutes to 20 minutes.

11. A process according to any one of the preceding claims, **characterised in that** the surface of the moulding tool is treated with a gas plasma for cleaning and/or activation thereof before the plasma polymerisation.

12. A moulding tool with a permanent demoulding layer adapted to be produced by a process according to claims 1 to 11.

13. A moulding tool according to claim 12, **characterised in that** no highly interactive or reactive groups are disposed on the surface of the demoulding layer.

14. A moulding tool according to claim 13, **characterised in that** a high proportion of CH₃ and CF₃ groups is present on the surface of the demoulding layer.

15. Use of a moulding tool according to any one of claims 12 to 14 for the demoulding of plastic articles.

16. Use according to claim 15 for demoulding polyurethane articles.

17. Use according to claim 16 for demoulding polyurethane foam articles.

## Revendications

1. Procédé de création d'une couche de déformation permanente par polymérisation au plasma sur la surface d'un outil de moulage par compression, **caractérisé en ce qu'**une structure à couches de gradient est créée dans la couche de déformation, par variation temporelle des conditions de polymérisation au cours de la polymérisation au plasma.

2. Procédé selon la revendication 1, **caractérisé en ce que** des composés de silicone, des composés de silicone fluorés, des hydrocarbures ou au moins des hydrocarbures partiellement fluorés sont utilisés en tant que précurseurs de la réaction de polymérisation.

3. Procédé selon la revendication 2, **caractérisé en ce qu'**au moins un siloxane est utilisé en tant que précurseur de la réaction de polymérisation.

4. Procédé selon la revendication 3, **caractérisé en ce que** de l'hexaméthyle disiloxane (HMDSO) et/ou de l'octaméthyle trisiloxane sont utilisés en tant que précurseurs de la réaction de polymérisation.

5. Procédé selon l'une quelconque des revendications précédentes, **caractérisé en ce que** de l'oxygène gazeux ou du gaz oxygène est utilisé lors de la polymérisation au plasma.

6. Procédé selon la revendication 5, **caractérisé en ce que** la concentration en oxygène gazeux est diminuée au cours de la polymérisation au plasma.

7. Procédé selon l'une quelconque des revendications précédentes, **caractérisé en ce que** les conditions sont choisies de façon à ce qu'une énergie moindre soit introduite dans le plasma qu'elle n'est nécessaire pour la fragmentation complète des précurseurs de la réaction de polymérisation.

8. Procédé selon l'une quelconque des revendications précédentes, **caractérisé en ce que** les conditions sont choisies de façon à obtenir un revêtement sensiblement clos de la surface de l'outil de moulage par compression.

9. Procédé selon l'une quelconque des revendications précédentes, **caractérisé en ce que** la couche de déformation est créée avec une épaisseur comprise entre 1nm et 10 µm, de préférence entre 10 nM et 5 µm et de façon très préconisée entre 100 nm et 1µm.

10. Procédé selon l'une quelconque des revendications précédentes, **caractérisé en ce que** la polymérisation au plasma est réalisée au cours d'une période comprise entre 1 seconde et 1 heure, de préférence entre 30 secondes et 30 minutes, de façon très préconisée entre 3 minutes et 20 minutes.

11. Procédé selon l'une quelconque des revendications précédentes, **caractérisé en ce que** la surface de l'outil de moulage par compression est traité pour être nettoyée et/ou activée à l'aide d'un plasma gazeux, préalablement à la polymérisation au plasma.

12. Outil de moulage par compression avec une couche de déformation permanente, pouvant être fabriquée selon l'une quelconque des revendications 1 à 11.

13. Outil de moulage par compression selon la revendication 12, **caractérisé en ce qu'**aucun groupe à forte interaction, ni aucun groupe réactif n'est placé en surface de la couche de déformation.

14. Outil de moulage par compression selon la revendication 13, **caractérisé en ce qu'**une forte fraction en groupes CH₃ et en groupes CF₃ est présente en surface de la couche de déformation.

15. Utilisation d'un outil de moulage par compression selon l'une quelconque des revendications 2 à 14, pour le démoulage d'objets en matière plastique.

16. Utilisation selon la revendication 15 pour le démoulage d'objets en polyuréthane.

17. Utilisation selon la revendication 16 pour le démoulage d'objets en mousse de polyuréthane.
